# EUROPEAN PATENT APPLICATION

(11) **EP 1 059 414 A2**
(43) Date of publication of application: **13.12.2000**
(21) Application number: 00109327.7
(22) Date of filing: 02.05.2000
(51) Int. Cl.: E06B 3/663

(54) **Spacer for insulated glass assembly**

(30) Priority: 09.06.1999 US 328430
(71) Applicant: LAFOND, Luc, Etobicoke, Ontario M9A 4H4 (CA)
(72) Inventor: LAFOND, Luc, Etobicoke, Ontario M9A 4H4 (CA)
(74) Representative: Johansson, Lars E.

(57) **Abstract**

A spacer (10) for insulated glass assembly and the like. A spacer is formed from a spacer core, having side faces (12,14) which face the substrates, with at least one elongate recess extending longitudinally within at least one of the side faces. A sealant material (26) covers the side faces (12,14) to engage the substrates, with the sealant material (26) filling the recess. A tongue and groove arrangement is formed between the core and sealant to prevent separation of the sealant from the core. A front face of the core may include a vapor barrier (32). Additional sealing capabilities may be provided by a second sealant material (30) joined to the first sealant (26), with the vapor barrier (32) at least partially embedded within the second sealant (30).

## Description

### FIELD OF THE INVENTION

This invention relates to a spacer for use in insulated substrate assemblies such as insulated glass ("IG") assemblies, for spacing apart the substrates at their peripheries while providing an insulating function.

### BACKGROUND OF THE INVENTION

Insulated assemblies presently known in the art incorporate the use of various polymeric substances in combination with other materials. One such assembly includes a butylated polymer in which there is embedded an undulating metal spacer strip. Although useful, this type of sealant strip is limited in that the metal spacer, over time, becomes exposed to the substrates which results in a drastic depreciation in the efficiency of the strip. The particular difficulty arises with moisture vapour transmission when the metal strip becomes exposed and contacts the substrates.

Further, many of the butylated polymers currently used in insulated glass assemblies are impregnated with a desiccant. This results in a further problem, namely decreased adhesiveness of the butylated sealant.

Glover et al. in US Patent No. 4,950,344, provide a spacer assembly including a foam body separated by a vapour barrier and further including a sealant means about the periphery of the assembly. Although this arrangement is particularly efficient from an energy point of view, one of the key limitations is that the assembly must be fabricated in a number of steps. Generally speaking, the sealant must be gunned about the periphery in a subsequent step to the initial placement of the spacer. This has ramifications during the manufacturing phase and is directly related to increased production costs and, therefore, increased costs in the assembly itself.

One of the primary weaknesses in existing spacer bodies and spacer assemblies relates to the transmission of energy through the spacer. Typically, in existing arrangements the path of heat energy flow through the spacer is simplified as opposed to torturous and in the case of the former, the result is easy transmission of energy from one substrate to the other via the spacer. In the prior art, this difficulty is compounded by the fact that materials are employed which have a strong propensity to conduct thermal energy.

It has been found particularly advantageous to incorporate high thermal performance materials. In one embodiment, a major component of the spacer may comprise a flexible resilient insulated body, of a material having low thermal conductivity. Such materials may be cellular and examples of materials found to be useful include natural and synthetic elastomers (rubber), cork, EPDM, silicones, polyurethanes and foamed polysilicones, urethanes and other suitable foamed materials. Significant benefits arise from the choice of these materials since not only are they excellent insulators from an energy point of view but additionally, depending on the materials used, the entire spacer can maintain a certain degree of resiliency. This is important where windows, for example, engaged with such a strip experience fluctuating pressure forces as well as a thermal contraction and expansion. By making use of a resilient body, these stresses are alleviated and accordingly, the stress is not transferred to the substrates as would be the case, for example, in assemblies incorporating relatively rigid spacers.

Where the insulating body is composed of a foam material, the foam body may be manufactured from thermoplastic or thermosetting plastics. Suitable examples of the thermosets include silicone and polyurethane. In terms of the thermoplastics, examples include silicone foam or elastomers, one example of the latter being SANTOPRENE™. Advantages ascribable to the aforementioned compounds include, in addition to what has been included above, high durability, minimal outgassing, low compression, high resiliency and temperature stability, inter alia.

Of particular use are the silicone and the polyurethane foams. These types of materials offer high strength and provide significant structural integrity to the assembly. The foam material is particularly convenient for use in insulating glazing or glass assemblies since a high volume of air can be incorporated into the material without sacrificing any structural integrity of the body. This is convenient since air is known to be a good insulator and when the use of foam is combined with a material having a low thermal conductivity together with the additional features of the spacer to be set forth hereinafter, a highly efficient composite spacer results. In addition, foam is not susceptible to contraction or expansion in situations where temperature fluctuations occur. This clearly is beneficial for maintaining a long-term uncompromised seal in an insulated substrate assembly. The insulating body may be selected from a host of suitable materials as set forth herein and in addition, it will be understood that suitable materials having naturally occurring interstices or materials synthetically created having the interstices would provide utility.

It has been found that it is particularly advantageous to provide a composite structure, comprising a spacer core featuring a high thermal performance, resilient characteristics, partly surrounded by a shell having superior substrate-engaging characteristics and preferably also incorporating vapour impermeable layer. The shell must firmly adhere to the core, in order to prevent any separation of the two components. Further, the shell may comprise a composite structure, for maximization of its desired characteristics.

It would be desirable to have a composite spacer which overcomes the limitations of the previously employed materials and the prior art and the energy limitations associated therewith. The present invention is directed to satisfying the limitations.

### SUMMARY OF THE INVENTION

One object of the present invention is to provide an improved composite spacer for use in insulated substrate or glass assemblies.

A further object of the present invention is to provide a composite spacer for spacing substrates in an insulated assembly, the assembly featuring an inner space defined by an atmosphere, comprising:
a spacer core comprising an elongate flexible resilient body including a front face facing the inner space, a rear face opposing the front face, and side faces joining the front and rear faces;
at least one elongate recess extending longitudinally within at least one of the side faces;
a first sealant material covering the side faces to provide first and second substrate engaging surfaces, with the sealant material filling the at least one recess thereby locking the sealant material and the core together to form an integral spacer assembly.

This arrangement achieves a spacer having superior insulating qualities through selection of an appropriate core material, while maintaining suitable sealant characteristics through a selection of an appropriate sealant on the side faces of the core, while minimizing the risk of separation of the two components by virtue of the effective tongue and groove type arrangement recited above.

Preferably, the frontface of the core includes vapour barrier means, whereby the spacer assembly is substantially vapour impermeable. The spacer may further include a desiccated matrix, for example at the front face.

In a further version, a dual seal is formed from a second sealant material different from the first sealant material, joined to the first sealant material in a co-planar arrangement to form a co-planar substrate engaging surface formed from two adjoining sealant materials. The vapour barrier means may be at least partially embedded in the second sealant. Conveniently, one of the sealants may comprise hot melt and the other polyisobutylene.

The core may comprise EPDM, or a foam or other cellular material.

A third sealant may be provided, different from the first and/or second sealants, and which is also in contact with the vapour barrier means. The resulting triple seal arrangement provides superior sealant characteristics, minimizing the risk of separation of a spacer from the substrates as the same expand and contract and otherwise shift over time. One or more of the sealant materials is conveniently curable by application of UV or other energy source, to fuse the sealant to the substrates and/or the vapour barrier means.

As will be appreciated by those skilled in the art, the assembly may employ polyisobutylene (PIB), butyl, hot melt, or any other suitable sealant or butylated material. Sealing or other adhesion for the insulating body may be achieved by providing special adhesives, e.g., acrylic adhesives, pressure sensitive adhesives, hot melt inter alia.

By providing at least two different sealing materials, the result is that discrete and separate sealing surfaces are attributed to the spacer. This is useful in the event that one seal is compromised. The sealant materials may be embedded within one another.

Regarding the vapour barrier, same may be metallized film, well known to those skilled in the art. Other suitable examples will be readily apparent.

The desiccated matrix may be configured to conform to any shape as required by the spacer body. Numerous advantages flow from the addition of the desiccated matrix, namely:
i) the addition of structural integrity to the spacer;
ii) the difference in density of the desiccated matrix relative to the cellular body further reduces the transmission of energy through the spacer from one side to the other; and
iii) the hygroscopic properties of the desiccant material assists in maintaining an arid atmosphere between the substrates.

Suitable desiccant materials are well known in the art and may include, as an example, zeolite beads, silica gel, calcium chloride, potassium chloride, inter alia, all of which may be matrixed within a semi-permeable flexible material such as a polysilicone or other suitable semi-permeable substance.

Having this generally described the invention, reference will now be made to the accompanying drawings illustrating preferred embodiments.

### BRIEF DESCRIPTION OF THE DRAWINGS

Figure 1 is a perspective view of a spacer core according to the present invention;
Figure 2 is an exploded end view of a spacer according to the invention;
Figure 3 is an exploded side view illustrating an alternate embodiment;
Figures 4(a) to 4(d) are end views of alternate embodiments of the spacer of Figure 2, with various components omitted for clarity;
Figure 5 is an exploded end view illustrating an alternate embodiment; and
Figure 6 is a perspective view of the spacer in-situ between substrates.

Similar numerals in the drawing denote similar elements.

### DETAILED DESCRIPTION OF THE PREFERRED EMBODIMENTS

Referring to the Figures, a composite spacer is globally designated 10, and comprises in general terms a spacer core 11, surrounded on three sides by a shell 26.

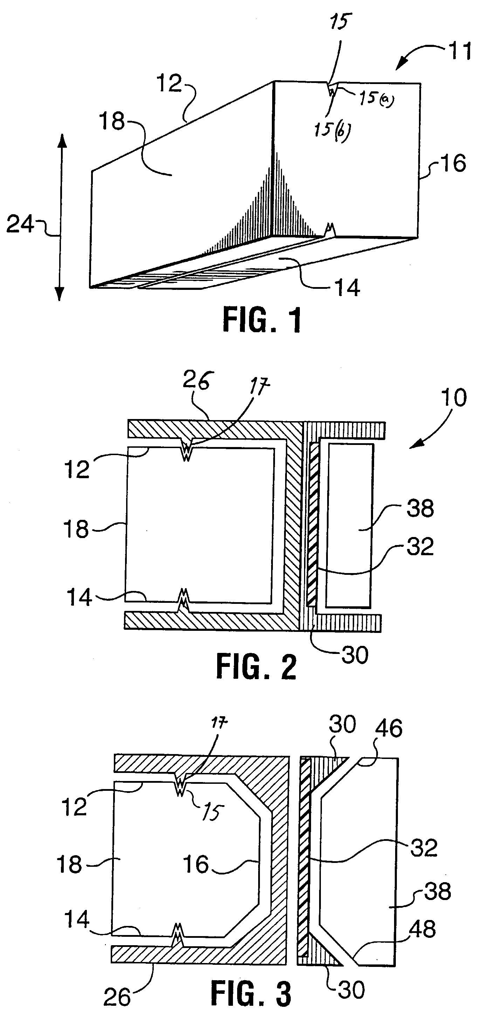

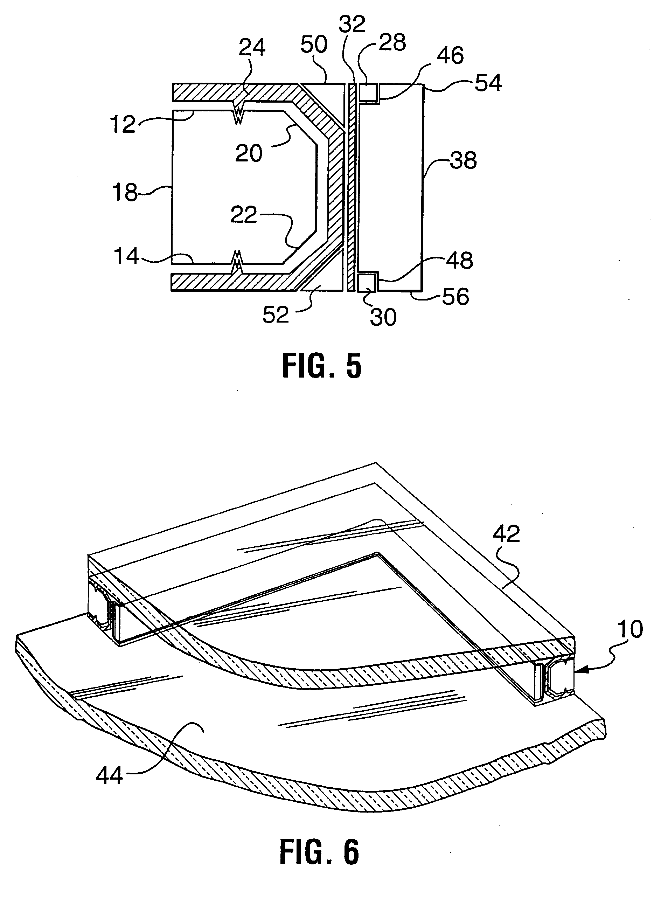

Referring now to Figure 1, shown is the spacer core of one embodiment of the present invention in which numeral 11, globally denotes the spacer core. In the embodiment shown, the spacer core 11 includes a pair of side faces 12 and 14 in spaced relation, and a front face, globally denoted by numeral 16, and a rear face, globally denoted by numeral 18. The front face 16 faces the interior of an insulated glass assembly, as shown in Figure 6.

Regarding the spacer core 11, the same may be composed of a cellular material which may be synthetic or naturally occurring. In the instance where the cellular material is composed of a naturally occurring material, cork and sponge may be suitable examples and in the synthetic version, suitable polymers including, but not limited to polyvinyl chlorides, polysilicone, polyurethane, polystyrene among others are suitable examples. Cellular material is desirable since such materials, while providing structural integrity additionally provide a high degree of interstices or voids between the material. In this manner, a high volume of air is included in the structure and when this is combined with an overall insulating material, the air voids complement the effectiveness of the insulation.

When the choice of material is not cellular, any number of the high insulating materials known to have utility for the subject matter herein may be selected.

A groove-like recess 15 is disposed within each of the side faces 12 and 14, the function of which is discussed below. The recess extends longitudinally along the length of the sides, and in depth extends partway into the interior of the core 11. In cross-sectional configuration, as seen in the figures, the recess 15 has generally straight sidewalls 15(a) and a bifurcated floor 15(b).

Referring now to Figure 2, shown is an embodiment of the spacer 10 which would be typically employed in an insulated glass assembly such as that shown in Figure 6 wherein spacer 10 is disposed between two substrates 42 and 44 such as glass lites. With greater detail concerning Figure 2, the core 11 is surrounded on three sides, namely sides 12 and 14 and front face 16 with a first sealant material 26 which may comprise, as an example, hot melt. The sealant 26 generally subscribes to a C-shape. Adjacent to the first sealant 26, there is included a second sealant differing from the hot melt. The second sealant is adjacent to and in communication with the hot melt sealant 26. The second sealant, generally denoted by numeral 30, preferably comprises polyisobutylene (PIB). Other suitable materials or sealant and/or adhesion properties include acrylic adhesives, pressure sensitive adhesives, hot melt, polyisobutylene or other suitable butyl materials known to have utility for bonding such surfaces together. The dual sealant composite structure provides superior sealant abilities as compared with a single unitary sealant structure composed of a single sealant.

The sealant material 26 fills the recesses 15 within the core 11 with a flange-like member 17 extending in an inward direction from the shell of sealant. This structure enhances the bond between the core 11 and the sealant 26 by providing an interlocking "tongue and groove" type tortuous contacting face between the respective members. As will be seen below, the interlocking tongue and groove structure may be provided in numerous versions, several of which are illustrated below.

As an additional feature in the embodiment shown in Figure 2, the same includes a vapour barrier 32 which may comprise any of the suitable materials for this purpose, examples of which include polyester films, polyvinylfluoride films, etc. In addition, the vapour barrier 32 may be metallized. A useful example to this end is metallized Mylar™ film. In order to further enhance the effectiveness of the arrangement, vapour barrier 32 may be embedded in the polyisobutylene represented by numerals 28 and 30. This provision locates the barrier 32 and augments the structural integrity of the spacer 10.

An important feature related to the disposition of the vapour barrier 32, sealant 26 and resilient spacer body 11, is the degree of compliance this arrangement affords the entire assembly and vapour barrier 32. The barrier 32, since it is adjacent a resilient and compliant body 11, does not experience undue mechanical stress which could result in delamination of some of the elements of the overall assembly. The advantage of this arrangement is that compliance is possible without substrate seal compromise.

A supplemental advantage to the compliant body 11 is realized in that the sealant 26 is in direct adhesive contact with body 11. This has particular value in facilitating resiliency and compliance of the sealant 26 thus preventing disruption or breach encountered in systems devoid of this feature.

Engaged with vapour barrier 32 by fusion, adhesion or other means of contact, there is further included a desiccated matrix 38. The desiccated matrix 38 is positioned in a juxtaposed manner to vapour barrier 32. Desiccated matrices are well known in the art and suitable desiccant materials include zeolite beads, calcium chloride, potassium chloride, silica gel among others matrixed within a semi-permeable material such as polysilicones etc. Matrix 38 is maintained in positioned by sealant 34 and 36 associated with vapour barrier 32.

The desiccated matrix 38 is directed towards the interior atmosphere of the assembly and to this end, rear face 18 of core 11 may include additional peripheral sealing material. The selection of peripheral sealant will, of course, depend on the intended use and environment in which the assembly is to be used. A strong mechanical bond can be achieved using a host of suitable materials, examples of which include silicones, polysulfonated materials, butylated compound mixtures thereof, etc.

Figure 3 illustrates an alternate embodiment of the assembly shown in Figure 2. In the embodiment illustrated, the desiccated matrix 38 has cut inside corners 46 and 48 adjacent the contact surfaces for the substrate (not shown). In this manner, the recesses formed by the removed corners provide two areas within which the PIB may be disposed as shown. The removed areas have utility in containing the PIB from any "creeping" towards the interior atmosphere of the assembly when the spacer is positioned as shown in Figure 6. Further, the recesses cooperate with those on body 11 to firmly position the vapour barrier 32. Any number of shape possibilities exist for the removed portions on matrix 38. As an example, the portions may be more arcuate.

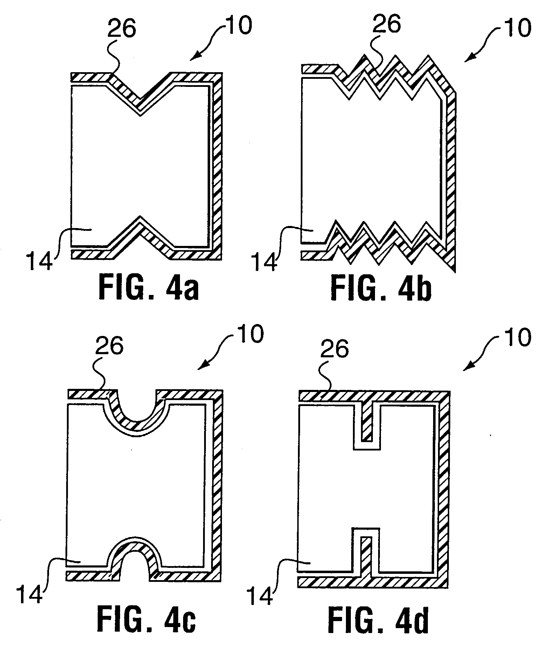

Referring now to Figures 4(a) through 4(d), shown are further embodiments of the spacer as illustrated in Figure 1. In particular, Figure 4(a) provides an arrowhead indentation in each of the side faces 12 and 14. Figure 4(b) provides a saw tooth arrangement in each of the surfaces 12 and 14. Figure 4(c) provides a version where the surfaces 12 and 14 include semi-spherical, spherical recesses, while Figure 4(d) provides a generally H-shaped profile.

In the instance where the material of which the spacer body is composed is formed of a material capable of elongation, then the difficulty with buckling about the corners of an insulated assembly may be obviated by simply elongating or "stretching" the body 11 prior to turning the corner in an insulated assembly as illustrated in Figure 6. In this instance, the thickness of the spacer body will be reduced due to the elongation and therefore, when the same is turned about a corner, the buckling problem will not result. This prestressing procedure is applicable where material is capable of elongation and would, of course, exclude cork and other cellular materials not amenable to prestressing.

It will be understood that the cellular material selections may vary and that the first and/or second insulating materials may comprise mixtures of cellular materials to further enhance the insulating capacity of the assembly.

Figure 5 illustrates yet another embodiment of the present invention in which at least three different sealant materials are incorporated in the spacer 10. Figure 5 illustrates a further feature wherein the spacer core 11 features a portion of material removed from each corner formed between the side and front faces, thereby forming a tapered portion of the core to reduce buckling when the spacer is flexed around a corner. Regarding the sealants, in combination with the PIB 28 and 30, partially embedding vapour barrier 32 and sealant 24, there may be provided a third sealant/adhesive material 50 and 52 adjacent moisture barrier 32 and filling the corner areas of the body 11 as illustrated. In this embodiment, the material will probably be selected from any suitable uncured sealant/adhesive material known to those skilled. Useful examples, without being limiting include various silicones and urethanes. Such curable materials which may be curable by U.V., I.R. or other forms of electromagnetic energy provide utility in insulated assemblies since they, when cured, are capable of fusion with glass substrates (not shown in Figure 5, see Figure 6) and the moisture barrier 32. When exposed to curing conditions, the arrangement set forth above results in fusion at two distinct sites, namely, the interface of the sealant 50, 52 with each substrate (not shown) and with the moisture vapour barrier 32. This feature is quite beneficial to the overall mechanical integrity and consolidation of the spacer in the assembly. A further attendant advantage to this arrangement relates to the multiple distinct sealing surface it provides with the concomitant insulation against moisture ingress or energy transfer.

Optionally, substrate engaging surfaces 54 and 56 of desiccated matrix 30 may include curable adhesive materials as opposed to regular sealants/adhesives.

Further, it is contemplated that several different materials may be incorporated in the cellular material of the spacer body as set forth herein. In addition, it is to be understood that where the body is composed of several different materials, the materials need not be homogenously formed into a cellular body, e.g. by foaming etc., the same may be composed of a multiple section core body composed of several different materials sandwiched together.

Although embodiments of the invention have been described above, it is not limited thereto and it will be apparent to those skilled in the art that numerous modifications form part of the present invention insofar as they do not depart from the spirit, nature and scope of the claimed and described invention.

## Claims

1. A composite resilient spacer for spacing substrates to define an inner space containing an atmosphere of the type comprising:
a spacer core (11) comprising a flexible resilient body including a front face (16) facing said inner space and a rear face (18) in spaced relation, and side faces joining said front and rear faces, characterized by at least one of said side faces having recessed therein at least one elongate longitudinal recess (15) extending generally the length of said spacer core;
a first sealant material (26) covering said side faces to provide first and second substrate engaging surfaces, said sealant material filling said at least one recess forming thereby an interlocking tongue and groove arrangement between said sealant and said core.

2. The composite spacer as set forth in claim 1, further comprising a second sealant material (30) different from said first sealant material associated with each said side faces and in contact with said first sealant material to provide a second sealing surface.

3. The composite spacer as set forth in claim 1, wherein said front face includes vapour barrier means (32).

4. The composite spacer as set forth in claim 3, wherein said composite spacer further includes a desiccated matrix (38).

5. The composite spacer as set forth in claim 1, wherein said vapour barrier means is at least partially embedded in said second sealant.

6. The composite spacer as set forth in claim 1, wherein said first sealant comprises hot melt.

7. The composite spacer as set forth in claim 6, wherein said second sealant comprises polyisobutylene.

8. The composite spacer as set forth in claim 1, wherein said resilient body comprises EPDM.

9. The composite spacer as set forth in claim 1, wherein said resilient body comprises foam material.

10. The composite spacer as set forth in claim 8, wherein said foam material includes at least two chemical materials.

11. The composite spacer as set forth in claim 4 ,wherein said desiccated matrix has at least a portion of material removed from each substrate contacting surface.

12. The composite spacer of claim 1, wherein said resilient body comprises a cellular body.

13. The composite spacer of claim 3, further comprising:
a third sealant (50 and 52) different from said first sealant and said second sealant in contact with said vapour barrier means; and
a desiccated matrix (38) in adhesive contact with said third sealant and said vapor barrier means.

14. The spacer as set forth in claim 12, in combination with glass substrates (42 and 44) engaged with a respective substrate engaging surface to form an insulated glass unit.

15. The spacer as set forth in claim 13, wherein said curable sealant is fused to said substrates and said vapour barrier means.

16. The spacer as set forth in claim 12, wherein said resilient body comprises a cellular body.
